# EUROPÄISCHE PATENTSCHRIFT

(11) **EP 3 229 438 B1**
(45) Veröffentlichungstag und Bekanntmachung des Hinweises auf die Patenterteilung: **25.12.2019**
(21) Anmeldenummer: 17162477.8
(22) Anmeldetag: 23.03.2017
(51) Int. Cl.: H04L 29/06

(54) **KOMMUNIKATIONSVORRICHTUNG UND VERFAHREN ZUM ÜBERMITTELN VON STEUER- UND SPRACHSIGNALEN**
COMMUNICATION DEVICE AND METHOD OF COMMUNICATING CONTROL AND SPEECH SIGNALS
DISPOSITIF DE COMMUNICATION ET PROCÉDÉ DE DÉTERMINATION DE SIGNAUX DE COMMANDE ET VOCAUX

(30) Priorität: 06.04.2016 DE 102016205663
(43) Veröffentlichungstag der Anmeldung: 11.10.2017
(73) Patentinhaber: Atos Convergence Creators GmbH, 1210 Wien (AT)
(72) Erfinder: VIZAEI, Mohammad, 1220 Wien (AT)
(74) Vertreter: Novagraaf Technologies

(56) Entgegenhaltungen:
- GB-A- 2 457 492
- US-B2- 8 908 854

## Beschreibung

Die Erfindung betrifft eine Kommunikationsvorrichtung und ein Verfahren zum Übermitteln von Steuer- und Sprachsignalen. Insbesondere betrifft die Erfindung eine Kommunikationsvorrichtung, mit der Steuer- und Sprachsignale über ein Netz, insbesondere über ein digitales Netz übermittelbar sind.

Ein Beispiel eines digitalen Netzes ist das TETRA (terrestrial trunked radio) Netz, welches ein Standard für digitalen Bündelfunk darstellt. TETRA-Endgeräte umfassen in der Regel eine PEI-Schnittstelle (Peripheral Equipment Interface) zum Anschluss an einen Computer. Über die PEI-Schnittstelle lassen sich die TETRA-Endgeräte über den Computer steuern.

Ein typisches Szenario für ein TETRA-Netz ist, dass eine sogenannte TETRA-Dispatching Einheit z.B. als Leitstelle bzw. eine TETRA-Dispatching Vorrichtung als Beispiel eines TETRA-Endgerätes über das TETRA-Netz mit einem weiteren TETRA-Endgerät kommuniziert. Für die Verbindung zwischen der TETRA-Dispatching Vorrichtung und dem TETRA-Netz kann ein TETRA-Modem geschaltet sein. Das TETRA-Modem umfasst normalerweise analoge Audio Ein- und Ausgänge für eine bi-direktionale Kommunikation analoger Sprachsignale mit der TETRA-Dispatching Vorrichtung, eine PEI-Schnittstelle und einen Antennenanschluss zum Verbinden des TETRA-Modems mit einer Antenne. Die PEI-Schnittstelle kann mit einer seriellen Schnittstelle, einer LAN-Verbindung über IP oder einer USB-Schnittstelle der TETRA-Dispatching Vorrichtung für eine bi-direktionale Kommunikation für Steuersignale zwischen dem TETRA-Modem und der TETRA-Dispatching Vorrichtung verbunden sein.

Die Verbindung über die serielle bzw. USB-Schnittstelle und die Verbindung der analogen Ein- und Ausgänge kann jedoch nur über relativ geringe Entfernungen erfolgen, sodass sich das TETRA-Modem relativ nahe an der TETRA-Dispatching Vorrichtung befinden muss. Außerdem erfolgt die Verbindung zwischen dem TETRA-Modem und dem TETRA-Netz üblicherweise drahtlos, sodass sich das TETRA-Modem innerhalb des Abdeckungsbereichs des TETRA-Netzes befinden sollte.

Ein TETRA Modem Adapter ist beispielsweise in GB 2 457 492 A beschrieben. Endgeräte werden dort über USB-Verbindungen angeschlossen.

In US 8,908,854 B2 ist eine Basisstation beschrieben, bei der die eigentliche Kommunikation zwischen Endgeräten über VoIP erfolgt. Die Endgeräte sind mit der Basisstation drahtlos über DECT verbunden.

Die Aufgabe der Erfindung ist es daher, eine Möglichkeit einer flexibleren Verbindung eines Endgerätes mit einem Netz anzugeben.

Die Aufgabe der Erfindung wird gelöst durch eine Kommunikationsvorrichtung gemäß Anspruch 1.

Die Kommunikationsvorrichtung ist also eingerichtet, im Voice Over IP Format vorliegende Steuer- und Sprachsignale zu erhalten, diese in ein Format umzuwandeln, das dem Netz zugeordnet ist, und die umgewandelten Steuer- und Sprachsignale an das Netz zu übergeben. Die Kommunikationsvorrichtung ist ferner eingerichtet, die in dem dem Netz zugeordneten Format vorliegenden weiteren Steuer- und Sprachsignale vom Netz zu erhalten, um diese in die weiteren Steuer- und Sprachsignale im Voice Over IP Format umzuwandeln und zu versenden. Dadurch kann z.B. eine bi-direktionale Kommunikation zweier Endgeräte über die Kommunikationsvorrichtung und das Netz ermöglicht werden. Da die Steuer- und Sprachsignale z.B. über ein IP Netz übertragen werden können, ist es nun möglich, dass eine Applikation, wie z.B. ein Disptatcher, in einer relativ großen Entfernung zum Modem betrieben werden kann.

Die Kommunikationsvorrichtung umfasst die Rechnervorrichtung und das Modem. Die Hardware der Rechnervorrichtung ist vorzugsweise als ein Standard-Computer oder PC ausgeführt und umfasst die Voice Over IP Schnittstelle, die Schnittstelle und die analogen Ein- und Ausgänge. Die Voice Over IP Schnittstelle ist z.B. eine LAN Schnittstelle.

Die Rechnervorrichtung ist eingerichtet, die Steuer- und Sprachsignale im Voice Over IP Format zu erhalten. Diese stammen z.B. von einem Endgerät, im Falle des als TETRA-Netz ausgebildeten digitalen Netzes z.B. von einer TETRA-Dispatching Vorrichtung.

Ein weiterer Aspekt der Erfindung betrifft demnach ein System, aufweisend die Kommunikationsvorrichtung und ein Endgerät mit einer weiteren Voice Over IP Schnittstelle, welche mit der Voice Over IP Schnittstelle der Rechnervorrichtung verbunden ist. Das Endgerät ist vorzugsweise eine TETRA-Dispatching Vorrichtung. Die weitere Voice Over IP Schnittstelle ist z.B. eine LAN-Schnittstelle.

Die Rechnervorrichtung ist eingerichtet, die über ihre Voice Over IP Schnittstelle erhaltenen Steuer- und Sprachsignale im Voice Over IP Format in Steuersignale und in analoge Sprachsignale umzuwandeln, um diese über ihre Schnittstelle und ihren analogen Ausgang an das Modem zu übermitteln. Da die Voice Over IP Steuer- und Sprachsignale auch Steuerinformationen umfassen, wird dies bisweilen auch als Radio Over IP bezeichnet.

Um die analogen Sprachsignale aus den Steuer- und Sprachsignale im Voice Over IP Format zu erhalten, umfasst die Rechnervorrichtung z.B. einen Digital-Analog-Wandler. Die Schnittstelle ist z.B. eine serielle Schnittstelle oder eine USB-Schnittstelle.

Das Modem erhält von der Rechnervorrichtung die analogen Sprachsignale über ihren analogen Eingang und die Steuersignale über ihre Signal-Steuer-Schnittstelle.

Die Rechnervorrichtung ist insbesondere derart eingerichtet, die Steuer- und Sprachsignale im Voice Over IP Format in die analogen Sprachsignale und die Steuersignale in ein der Signal-Steuer-Schnittstelle zugeordnetes Format umzuwandelnd.

Die Signal-Steuer-Schnittstelle ist vorzugsweise eine PEI-Schnittstelle (Peripheral Equipment Interface), sodass die von der Rechnervorrichtung an das Modem gesendeten Steuersignale im PEI-Format vorliegen.

Das Modem ist eingerichtet, die erhaltenen Steuersignale und analogen Sprachsignale für ein Versenden über die Netzwerkschnittstelle an das Netz in ein dem Netz zugeordnetes Format umzuwandeln. Die Netzwerkschnittstelle kann z.B. eine drahtlose Schnittstelle sein und z.B. eine Antenne umfassen. Die Netzwerkschnittstelle kann auch ein Antennenausgang sein, der mit einer Antenne verbunden ist. Die Antenne kann gegebenenfalls Teil der Kommunikationsvorrichtung sein.

Das Modem der Kommunikationsvorrichtung ist ferner eingerichtet, über seine Netzwerkschnittstelle die in dem dem Netz zugeordneten Format vorliegenden weiteren Steuer- und Sprachsignale zu erhalten, diese in weitere Steuersignale und weitere analoge Sprachsignale umzuwandeln, um diese über seine Signal-Steuer-Schnittstelle bzw. seinen analogen Ausgang an die Rechnervorrichtung zu übermitteln. Die Rechnervorrichtung erhält die weiteren Steuersignale über seine Schnittstelle und die weiteren analogen Sprachsignale über seinen anlogen Eingang. Die Rechnervorrichtung ist eingerichtet, die erhaltenen weiteren Steuersignale und die weiteren analogen Sprachsignale in das Voice Over IP Format umzuwandeln, um diese über seine Voice Over IP Schnittstelle zu versenden. Für das Umwandeln der weiteren analogen Sprachsignale umfasst die Rechnervorrichtung z.B. einen Analog-Digital-Wandler.

Vorzugsweise kann ein konventionelles TETRA-Modem als Modem verwendet werden.

Ein weiterer Aspekt der Erfindung betrifft ein Verfahren zum Übermitteln von Steuer- und Sprachsignalen mit der Kommunikationsvorrichtung, aufweisend folgende Verfahrensschritte:
Erhalten von Steuer- und Sprachsignalen im Voice Over IP Format über die Voice Over IP Schnittstelle z.B. von einem Endgerät, insbesondere von einer TETRA-Dispatching Vorrichtung
mit der Rechnervorrichtung, Umwandeln der Steuer- und Sprachsignale im Voice Over IP Format in Steuersignale und in analoge Sprachsignale,
Übermitteln der analogen Sprachsignale über den analogen Ausgang der Rechnervorrichtung und den analogen Eingang des Modems und der Steuersignale über die Schnittstelle und über die Signal-Steuer-Schnittstelle an das Modem,
mit dem Modem, Umwandeln der Steuersignale und der analogen Sprachsignale in dem dem Netz zugeordneten Format umgewandelte Steuer- und Sprachsignale, und
Versenden der in dem Netz zugeordneten Format umgewandelten Steuer- und Sprachsignale über die Netzwerkschnittstelle und das Netz.

Zusätzlich können folgende Verfahrensschritte durchgeführt werden:
Erhalten von in dem dem Netz zugeordneten Format vorliegenden weiteren Steuer- und Sprachsignale über die Netzwerkschnittstelle,
mit dem Modem, Umwandeln der in dem dem Netz zugeordneten Format vorliegenden weiteren Steuer- und Sprachsignalen in weitere Steuersignale und weitere analoge Sprachsignale,
Übermitteln der weiteren analogen Sprachsignale über den analogen Ausgang des Modems und den analogen Eingang der Rechnervorrichtung und der weiteren Steuersignale über die Schnittstelle und über die Signal-Steuer-Schnittstelle an die Rechnervorrichtung,
mit der Rechnervorrichtung, Umwandeln der weiteren Steuersignale und der weiteren analogen Sprachsignale in weitere Steuer- und Sprachsignale im Voice Over IP Format, und
Versenden der im Voice Over IP Format vorliegenden weiteren Steuer- und Sprachsignale über die Voice Over IP Schnittstelle der Rechnervorrichtung z.B. an ein Endgerät, insbesondere an eine TETRA-Dispatching Vorrichtung.

Ein Ausführungsbeispiel der Erfindung ist exemplarisch in den beigefügten schematischen Figuren dargestellt. Es zeigen:

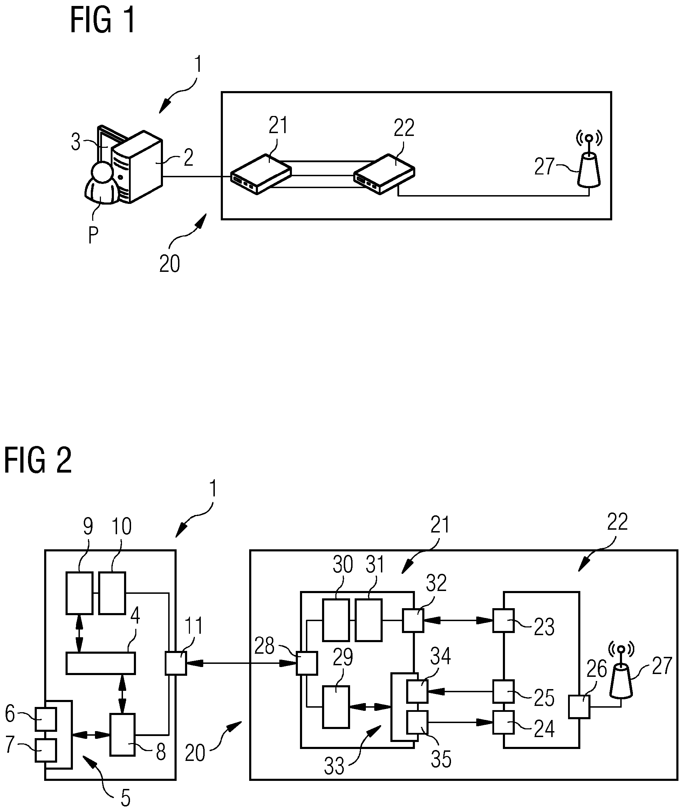

- Figuren 1 und 2: eine TETRA-Dispatching Vorrichtung und eine Kommunikationsvorrichtung.

Die Figuren 1 und 2 zeigen als Beispiel eines Endgerätes eine TETRA-Dispatching Vorrichtung 1 und eine Kommunikationsvorrichtung 20.

Die TETRA-Dispatching Vorrichtung 1 umfasst insbesondere einen Rechner 2, einen mit dem Rechner 2 verbundenen Monitor 3, eine nicht näher dargestelltes Eingabemittelt z.B. in Form einer Tastatur, ein nicht näher dargestelltes Mikrofon und einen nicht näher dargestellten Lautsprecher. Die TETRA-Dispatching Vorrichtung 1 kann einen Server und einen Client umfassen.

Im Falle des vorliegenden Ausführungsbeispiels läuft auf der TETRA-Dispatching Vorrichtung 1 bzw. auf deren Rechner 2 eine Applikationssoftware 4.

Im Falle des vorliegenden Ausführungsbeispiels umfasst die TETRA-Dispatching Vorrichtung 1 bzw. deren Rechner 2 eine Audiokarte bzw. Soundkarte 5, welche einen Mikrofoneingang 6 und einen Lautsprecherausgang 7 aufweist. Das Mikrofon der TETRA-Dispatching Vorrichtung 1 ist am Mikrofoneingang 6 und der Lautsprecher der TETRA-Dispatching Vorrichtung 1 ist am Lautsprecherausgang 7 angeschlossen.

Im Falle des vorliegenden Ausführungsbeispiels umfasst die TETRA-Dispatching Vorrichtung 1 bzw. deren Rechner 2 einen Voice Over IP Client 8, einen PEI-Treiber 9, einen USB Over IP Treiber 10 und eine LAN-Schnittstelle 11. Die Sound Karte 5 vermag bi-direktional mit dem Voice Over IP Client 8 zu kommunizieren und die Applikationssoftware 4 steuert insbesondere den PEI-Treiber 9 und den Voice Over IP Client 8. Der PEI Treiber 9 ist insbesondere mit USB Over IP Treiber 10 verbunden. Die LAN-Schnittstelle 11 ist insbesondere mit dem Voice Over IP Client 8 und dem USB Over IP Treiber 10 verbunden.

Die Kommunikationsvorrichtung 21 umfasst im Falle des vorliegenden Ausführungsbeispiels eine Rechnervorrichtung 21 und ein Modem 22. Das Modem 22 ist ein TETRA-Modem.

Das Modem 20 umfasst im Falle des vorliegenden Ausführungsbeispiels eine PEI-Schnittstelle 23, einen analogen Eingang 24, einen analogen Ausgang 25 und eine Netzwerkschnittstelle in Form eines Antennenanschlusses 26, an dem eine Antenne 27 angeschlossen ist. Die PEI-Schnittstelle 23 kann als eine USB-Schnittstelle ausgeführt sein. Mit der Antenne 27 ist das Modem 22 mit einem TETRA-Netz verbunden.

Die Rechnervorrichtung 21 umfasst eine z.B. als LAN-Schnittstelle ausgeführte Voice Over IP Schnittstelle 28, welche mit der LAN Schnittstelle 11 der TERRA-Dispatching Vorrichtung 1 verbunden ist. Anstelle der LAN-Schnittstelle 11, die eine weitere Voice Over IP Schnittstelle darstellt, kann auch eine USB-Schnittstelle vorgesehen sein. Die Hardware der Rechnervorrichtung 21 ist z.B. als Computer, insbesondere als ein PC ausgeführt.

Im Falle des vorliegenden Ausführungsbeispiels umfasst die Rechnervorrichtung 21 einen mit der Voice Over IP Schnittstelle 28 der Rechnervorrichtung 21 verbundenen Voice Over IP Client 29, einen mit der Voice Over IP Schnittstelle 28 der Rechnervorrichtung 21 verbundenen PEI Over IP Treiber 30, einen PEI-Treiber 31 und eine Schnittstelle 32. Der PEI-Treiber 31 ist mit der Schnittstelle 32 und dem PEI Over IP Treiber 30 verbunden. Die Schnittstelle 32 ist insbesondere eine serielle Schnittstelle, vorzugsweise eine USB-Schnittstelle.

Im Falle des vorliegenden Ausführungsbeispiels umfasst die Rechnervorrichtung 21 einen Analog-Digital-Wandler und einen Digital-Analog-Wandler, welche z.B. in einer Audiokarte bzw. Soundkarte 33 zusammengefasst sind. Die Soundkarte 33 ist eingerichtet, bi-direktional mit dem Voice Over IP Client 29 zu kommunizieren und umfasst einen analogen Eingang 34 und einen analogen Ausgang 35.

Die LAN-Schnittstelle 11 ist mit der Voice Over IP Schnittstelle 28 der Rechnervorrichtung 21 für eine bi-direktionale Kommunikation zwischen der TETRA-Dispatching Vorrichtung 1 und der Rechnervorrichtung 21 verbunden.

Die Schnittstelle 32 der Rechnervorrichtung 21 ist mit der PEI-Schnittstelle 23 des Modems 22 für eine bi-direktionale Kommunikation verbunden.

Der analoge Ausgang 25 des Modems 22 ist mit dem analogen Eingang 34 der Rechnervorrichtung 21 und der analoge Ausgang 35 der Rechnervorrichtung 21 ist mit dem analogen Eingang 24 des Modems 22 verbunden.

Die PEI-Schnittstelle 23 des Modems 22 ist ein Beispiel einer Signal-Steuer-Schnittstelle und realisiert einen Steuerkanal für das Modem 22. Beispielsweise kann dieser Steuerkanal verwendet werden, um Gruppengespräche oder individuelle Gespräche zwischen der TETRA-Dispaching Vorrichtung 1 und einem mit dem TETRA-Netz verbundenen, nicht dargestellten TETRA-Endgerät zu steuern. Mittels des Steuerkanals können auch Half Duplex Gespräche, Full Duplex Gespräche oder Nachrichten gesteuert werden, und zwar sowohl von der TETRA-Dispatching Vorrichtung 1 zum weiteren TETRA-Endgerät als auch vom weiteren TETRA-Endgerät zur TETRA-Dispatching Vorrichtung 1.

Die von dem Mikrophon stammenden und die für den Lautsprecher bestimmte Signale sind analoge Signale.

Nachfolgend wird die Funktionsweise der Kommunikationsvorrichtung 20 beschrieben:
Die Rechnervorrichtung 21 ist insbesondere eingerichtet, mit der TETRA-Dispatching Vorrichtung 1 über die LAN-Schnittstelle 11 und die Voice Over IP Schnittstelle 28 z.B. über USB oder LAN Technologie bi-direktional zu kommunizieren. Die Rechnervorrichtung 21 ist insbesondere eingerichtet, bi-direktional über ihre Schnittstelle 32 und der PEI-Schnittstelle 23 mit dem Modem 22 zu kommunizieren.

Die Rechnervorrichtung 21 umfasst insbesondre den Voice Over IP Client 29, der vorzugsweise einen SIP (Session Initiation Protocol) Agenten umfassen kann, und die Soundkarte 33. Die Soundkarte 33 ist im Falle des vorliegenden Ausführungsbeispiels insbesondere über die analogen Ein- und Ausgänge 34, 35 der Rechnervorrichtung 21 und den analogen Ein- und Ausgängen 24, 25 des Modems 22 mit dem Modem 22 verbunden.

Im Falle des vorliegenden Ausführungsbeispiels wird eine Kommunikation vorzugsweise durch eine SIP Prozedur eingeleitet, um eine Verbindung zwischen der TETRA-Dispatching Vorrichtung 1 und der Rechnervorrichtung 20 herzustellen.

Möchte nun eine die TETRA-Dispatching Vorrichtung 1 benutzende Person P über das TETRA-Netz eine Verbindung mit einem in den Figuren nicht dargestellten Endgerät aufbauen, so beginnt diese Verbindung insbesondere mit einer Steuerung über die PEI-Schnittstelle 23, insbesondere mittels Tunneling über die Voice Over IP Schnittstelle 28 der Rechnervorrichtung 21, welche dadurch das Modem 22 steuert.

Das Modem 22 erhält Steuersignale über seine PEI-Schnittstelle 23.

Ein Audiokanal für Audio- bzw. Sprachsignale, welche die Person P z.B. mittels des Mikrofons erzeugt, wird mittels des Voice Over IP Clints 8, vorzugsweise über SIP, erzeugt.

Insbesondere wird z.B. die Verbindung von der Person P durch Aktivieren eines nicht dargestellten Eingabemittels der TETRA-Dispatching Vorrichtung 1 initiiert. Durch das Mikrofon erzeugte Sprachsignale werden durch die Soundkarte 5 der TETRA-Dispatching Vorrichtung 1 digitalisiert. Insbesondere gesteuert durch die Applikationssoftware 4 und mittels des Voice Over IP Clients 8, des PEI-Treibers 9 und des USB Over IP Treibers 10 werden Steuer- und Sprachsignalen im Voice O-ver IP Format erzeugt, welche die TETRA-Dispatching Vorrichtung 1 über seine LAN-Schnittstelle 11 an die Voice Over IP Schnittstelle 28 der Rechnervorrichtung 21 übermittelt. Da die Voice Over IP Steuer- und Sprachsignale auch Steuerinformationen umfassen, wird dies bisweilen auch als Radio Over IP bezeichnet.

Somit erhält die Rechnervorrichtung 21 die Steuer- und Sprachsignale.

Die Rechnervorrichtung 21 wandelt die Steuer- und Sprachsignale im Voice Over IP Format in Steuersignale und in analoge Sprachsignale um. Im Falle der analogen Sprachsignale erfolgt dies im Falle des vorliegenden Ausführungsbeispiels mittels des Voice Over IP Clients 29 und der Soundkarte 33 der Rechnervorrichtung 21. Im Falle der Steuersignale erfolgt dies mittels des PEI Over IP Treibers 30 und des PEI-Treibers 31. Somit liegen die Steuersignale im PEI-Format vor.

Anschließend werden die analogen Sprachsignale über den analogen Ausgang 35 der Rechnervorrichtung 21 und dem analogen Eingang 24 des Modems 22 und die Steuersignale über die Schnittstelle 32 und über die Signal-Steuer-Schnittstelle 23 an das Modem 22 übertragen.

Das Modem 22 wandelt die Steuersignale und die analogen Sprachsignale in Steuer- und Sprachsignale im TETRA-Format um und sendet diese über seinen Antennenanschluss 26, die Antenne 27 und das TETRA-Netz an das Endgerät.

Soll nun die TETRA-Dispatching Vorrichtung 1 einen Anruf erhalten, dann erhält zunächst das Modem 22 über das TETRA-Netz, der Antenne 27 und über seinen Antennenanschluss 26 weitere Steuer- und Sprachsignale im TETRA-Format. Das Modem 22 initiiert daraufhin die Verbindung mit der TETRA-Dispatching Vorrichtung 1 über die Rechnervorrichtung 21.

Das Modem 22 wandelt daraufhin die weiteren Steuer- und Sprachsignale im TETRA-Format in weitere Steuersignale und weitere analoge Sprachsignale um. Die weiteren Steuersignale werden ins PEI-Format umgewandelt.

Das Modem 22 übermittelt daraufhin die weiteren analogen Sprachsignale über seinen analogen Ausgang 25 an die Rechnervorrichtung 21 über deren analogen Eingang 34 und die weiteren Steuersignale über die PEI-Schnittstelle 23 und der Schnittstelle 32 an die Rechnervorrichtung 21.

Die Rechnervorrichtung 21 wandelt daraufhin mit seiner Soundkarte 33, dem Voice Over IP Client 23, dem PEI-Treiber 31 und dem PEI Over IP Treiber 30 die weiteren analogen Sprachsignale und die weiteren Steuersignale in weitere Voice Over IP Steuer- und Sprachsignale um, um diese über seine Voice Over IP Schnittstelle 28 an die TETRA-Dispatching Vorrichtung 1 zu übermitteln.

Die TETRA-Dispatching Vorrichtung 1 kann dann die erhaltenen weiteren Voice Over IP Steuer- und Sprachsignale wieder derart aufbereiten, dass z.B. die weiteren Sprachsignale mittels des Lautsprechers hörbar werden.

Die Voice Over IP Steuer- und Sprachsignale bzw. die weiteren Voice Over IP Steuer- und Sprachsignale können z.B. auf dem H.323 oder dem SIP Protokoll basieren. Es kann auch ein RTP Protokoll verwendet werden.

## Patentansprüche

1. Kommunikationsvorrichtung, aufweisend
ein Modem (22), das eine Signal-Steuer-Schnittstelle (23), analoge Ein- und Ausgänge (25, 24), und eine zum Verbinden mit einem Netz vorgesehene Netzwerkschnittstelle (26) aufweist, und
eine Rechnervorrichtung (21), die eine Voice Over IP Schnittstelle (28) zum Verbinden mit einem Endgerät (1), eine Schnittstelle (32) und analoge Ein- und Ausgänge (35, 34) aufweist, wobei
die Rechnervorrichtung (21) eingerichtet ist, über ihre Voice Over IP Schnittstelle (28) Steuer- und Sprachsignale im Voice Over IP Format zu erhalten, diese in Steuersignale und in analoge Sprachsignale umzuwandeln, und die analogen Sprachsignale über seinen analogen Ausgang (35) und den analogen Eingang (24) des Modems (22) und die Steuersignale über die Schnittstelle (32) und über die Signal-Steuer-Schnittstelle (23) an das Modem (22) zu übermitteln, und
das Modem (22) eingerichtet ist, die Steuersignale und analogen Sprachsignale für ein Versenden über die Netzwerkschnittstelle (26) und das Netz in ein dem Netz zugeordnetes Format umzuwandeln, und
das Modem (22) eingerichtet ist, über seine Netzwerkschnittstelle (26) in dem dem Netz zugeordneten Format vorliegende weitere Steuer- und Sprachsignale zu erhalten, diese in weitere Steuersignale und weitere analoge Sprachsignale umzuwandeln, die weiteren analogen Sprachsignale über seinen analogen Ausgang (25) und den analogen Eingang (34) der Rechnervorrichtung (21) und die weiteren Steuersignale über die Signal-Steuer-Schnittstelle (23) und die Schnittstelle (32) an die Rechnervorrichtung (21) zu übermitteln, und die Rechnervorrichtung (21) eingerichtet ist, die weiteren Steuersignale und die weiteren analogen Sprachsignale für ein Versenden über die Voice Over IP Schnittstelle (28) in weitere Steuer- und Sprachsignale im Voice Over IP Format umzuwandeln,
**dadurch gekennzeichnet, dass** das Netz ein TETRA-Netz, das Modem (22) ein TETRA-Modem und die Signal-Steuer-Schnittstelle (23) eine PEI-Schnittstelle ist.

2. Kommunikationsvorrichtung nach Anspruch 1, wobei das Netz ein digitales Netz, und/oder die Voice Over IP Schnittstelle (28) eine LAN-Schnittstelle, und/oder die Schnittstelle (32) der Rechnervorrichtung (21) eine serielle Schnittstelle oder eine USB-Schnittstelle ist.

3. Kommunikationsvorrichtung nach Anspruch 1 oder 2, wobei die Rechnervorrichtung (21) einen Analog-Digital-Wandler und einen Digital-Analog-Wandler aufweist und eingerichtet ist, mit dem Digital-Analog-Wandler die analogen Sprachsignale aus den Steuer- und Sprachsignale im Voice Over IP Format umzuwandeln und mit dem Analog-Digital Wandler die in dem dem Netz zugeordneten Format vorliegenden weiteren Steuer- und Sprachsignale in die weiteren analogen Sprachsignale umzuwandeln.

4. Kommunikationsvorrichtung nach einem der Ansprüche 1 bis 3 aufweisend eine mit der Netzwerkschnittstelle (26) verbundene Antenne (27).

5. System, aufweisend die Kommunikationsvorrichtung (20) nach einem der Ansprüche 1 bis 4 und ein Endgerät mit einer weiteren Voice Over IP Schnittstelle (11), welche mit der Voice Over IP Schnittstelle (28) der Rechnervorrichtung (21) verbunden ist.

6. System nach Anspruch 5, wobei das Endgerät eine TETRA-Dispatching Vorrichtung (1) ist.

7. Verfahren zum Übermitteln von Steuer- und Sprachsignalen mit einer Kommunikationsvorrichtung (20) nach einem der Ansprüche 1 bis 4, aufweisend folgende Verfahrensschritte:
Erhalten von Steuer- und Sprachsignalen im Voice Over IP Format über die Voice Over IP Schnittstelle (28),
mit der Rechnervorrichtung (21), Umwandeln der Steuer- und Sprachsignale im Voice Over IP Format in Steuersignale und in analoge Sprachsignale,
Übermitteln der analogen Sprachsignale über den analogen Ausgang (35) der Rechnervorrichtung (21) und den analogen Eingang (24) des Modems (22) und der Steuersignale über die Schnittstelle (32) und über die Signal-Steuer-Schnittstelle (23) an das Modem (22),
mit dem Modem (22), Umwandeln der Steuersignale und der analogen Sprachsignale in dem Netz zugeordneten Format umgewandelte Steuer- und Sprachsignale, und
Versenden der in dem Netz zugeordneten Format umgewandelten Steuer- und Sprachsignale über die Netzwerkschnittstelle (26) und das Netz.

8. Verfahren nach Anspruch 7, zusätzlich aufweisend folgende Verfahrensschritte:
Erhalten von in dem dem Netz zugeordneten Format vorliegenden weiteren Steuer- und Sprachsignale über die Netzwerkschnittstelle (26),
mit dem Modem (22), Umwandeln der in dem dem Netz zugeordneten Format vorliegenden weiteren Steuer- und Sprachsignalen in weitere Steuersignale und weitere analoge Sprachsignale,
Übermitteln der weiteren analogen Sprachsignale über den analogen Ausgang (25) des Modems (22) und den analogen Eingang (34) der Rechnervorrichtung (21) und der weiteren Steuersignale über die Schnittstelle (32) und über die Signal-Steuer-Schnittstelle (23) an die Rechnervorrichtung (21),
mit der Rechnervorrichtung (21), Umwandeln der weiteren Steuersignale und der weiteren analogen Sprachsignale in weitere Steuer- und Sprachsignale im Voice Over IP Format, und
Versenden der weiteren Steuer- und Sprachsignale im Voice Over IP Format über die Voice Over IP Schnittstelle (28) der Rechnervorrichtung (21).

## Claims

1. Communication device, having
a modem (22), which has a signal-control interface (23), analogue inputs and outputs (25, 24) and a network interface (26) for connecting to a network, and
a computer device (21), which has a voice over IP interface (28) for connecting to a terminal (1), an interface (32) and analogue inputs and outputs (35, 34), wherein
the computer device (21) is configured to receive control and speech signals in the voice over IP format via its voice over IP interface (28), to convert the latter into control signals and analogue speech signals, and to transmit the analogue speech signals via its analogue output (35) and the analogue input (24) of the modem (22) and the control signals via the interface (32) and via the signal-control interface (23) to the modem (22), and the modem (22) is configured to convert the control signals and analogue speech signals for transmitting via the network interface (26) and the network into a format assigned to the network, and
the modem (22) is configured to receive additional control and speech signals in the format assigned to the network via its network interface (26), to convert the latter into additional control signals and additional analogue speech signals, to transmit the additional analogue speech signals via its analogue output (25) and the analogue input (34) of the computer device (21) and the additional control signals via the signal-control interface (23) and the interface (32) to the computer device (21), and the computer device (21) is configured to convert the additional control signals and the additional analogue speech signals into additional control and speech signals in the voice over IP format for sending via the voice over IP interface (28),
**characterised in that** the network is a TETRA network, the modem (22) is a TETRA modem and the signal-control interface (23) is a PEI interface.

2. Communication device according to claim 1, wherein the network is a digital network and/or the voice over IP interface (28) is a LAN interface and/or the interface (32) of the computer device (21) is a serial interface or a USB interface.

3. Communication device according to claim 1 or 2, wherein the computer device (21) has an analogue-digital converter and a digital-analogue converter and is configured by means of the digital-analogue converter to convert the analogue speech signals from the control and speech signals in voice over IP format and by means of the analogue-digital converter to convert the additional control and speech signals in the format assigned to the network into the additional analogue speech signals.

4. Communication device according to any of claims 1 to 3 having an antenna (27) connected to the network interface (26).

5. System, having the communication device (20) according to any of claims 1 to 4 and a terminal with an additional voice over IP interface (11), which is connected to the voice over IP interface (28) of the computer device (21).

6. System according to claim 5, wherein the terminal is a TETRA dispatching device (1).

7. Method for transmitting control and speech signals with a communication device (20) according to any of claims 1 to 4, having the following method steps:
receiving control and speech signals in voice over IP format via the voice over IP interface (28),
by means of the computer device (21), converting the control and speech signals in voice over IP format into control signals and into analogue speech signals,
transmitting the analogue speech signals via the analogue output (35) of the computer device (21) and the analogue input (24) of the modem (22) and the control signals via the interface (32) and via the signal-control interface (23) to the modem (22),
by means of the modem (22), converting the control signals and the analogue speech signals in the format assigned to the network into converted control and speech signals, and
sending the converted control and speech signals in the form assigned to the network via the network interface (26) and the network.

8. Method according to claim 7, additionally including the following method steps:
receiving additional control and speech signals in the format assigned to the network via the network interface (26),
by means of the modem (22), converting the additional control and speech signals in the format assigned to the network into additional control signals and additional analogue speech signals,
transmitting the additional analogue speech signals via the analogue output (25) of the modem (22) and the analogue input (34) of the computer device (21) and the additional control signals via the interface (32) and via the signal-control interface (23) to the computer device (21),
by means of the computer device (21), converting the additional control signals and the additional analogue speech signals into additional control and speech signals in voice over IP format, and
sending the additional control and speech signals in voice over IP format via the voice over IP interface (28) of the computer device (21).

## Revendications

1. Dispositif de communication, comprenant
un modem (22) qui comprend une interface de commande de signaux (23), des entrées et sorties analogiques (25, 24) et une interface réseau (26) prévue pour la liaison avec un réseau, et
un dispositif calculateur (21) qui comprend une interface Voix sur IP (28) pour la liaison avec un appareil terminal (1), une interface (32) et des entrées et sorties analogiques (35, 34), dans lequel
le dispositif calculateur (21) est conçu pour obtenir, par le biais de son interface Voix sur IP (28), des signaux de commande et vocaux dans le format Voix sur IP, pour convertir ceux-ci en des signaux de commande et en des signaux vocaux analogiques, et pour transférer les signaux vocaux analogiques par le biais de sa sortie analogique (35) et de l'entrée analogique (24) du modem (22) et les signaux de commande par le biais de l'interface (32) et par le biais de l'interface de commande de signaux (23) au modem (22), et le modem (22) est conçu pour convertir les signaux de commande et les signaux vocaux analogiques pour un envoi par le biais de l'interface réseau (26) et du réseau dans un format associé au réseau, et
le modem (22) est conçu pour obtenir par le biais de son interface réseau (26) dans le format associé au réseau d'autres signaux de commande et vocaux présents, pour convertir ceux-ci en d'autres signaux de commande et en d'autres signaux vocaux analogiques, transférer les autres signaux vocaux analogiques par le biais de sa sortie analogique (25) et de l'entrée analogique (34) du dispositif calculateur (21) et les autres signaux de commande par le biais de l'interface de commande de signaux (23) et de l'interface (32) au dispositif calculateur (21), et le dispositif calculateur (21) est conçu pour convertir les autres signaux de commande et les autres signaux vocaux analogiques pour un envoi par le biais de l'interface Voix sur IP (28) en d'autres signaux de commande et vocaux dans le format Voix sur IP,
**caractérisé en ce que** le réseau est un réseau TETRA, le modem (22) est un modem TETRA et l'interface de commande de signaux (23) est une interface PEI.

2. Dispositif de communication selon la revendication 1, dans lequel le réseau est un réseau numérique et/ou l'interface Voix sur IP (28) est une interface LAN et/ou l'interface (32) du dispositif calculateur (21) est une interface série ou une interface USB.

3. Dispositif de communication selon la revendication 1 ou 2, dans lequel le dispositif calculateur (21) comprend un convertisseur analogique-numérique et un convertisseur numérique-analogique, et est conçu pour convertir avec le convertisseur numérique-analogique les signaux vocaux analogiques à partir des signaux de commande et vocaux dans le format Voix sur IP et pour convertir avec le convertisseur analogique-numérique les autres signaux de commande et vocaux présents dans le format associé au réseau en les autres signaux vocaux analogiques.

4. Dispositif de communication selon l'une quelconque des revendications 1 à 3, comprenant une antenne (27) reliée à l'interface réseau (26).

5. Système, comprenant le dispositif de communication (20) selon l'une quelconque des revendications 1 à 4 et un appareil terminal avec une autre interface Voix sur IP (11) qui est reliée à l'interface Voix sur IP (28) du dispositif calculateur (21) .

6. Système selon la revendication 5, dans lequel l'appareil terminal est un dispositif de distribution TETRA (1).

7. Procédé de transfert de signaux de commande et vocaux avec un dispositif de communication (20) selon l'une quelconque des revendications 1 à 4, comprenant les étapes de procédé suivantes :
l'obtention de signaux de commande et vocaux dans le format Voix sur IP par le biais de l'interface Voix sur IP (28),
avec le dispositif calculateur (21), la conversion des signaux de commande et vocaux dans le format Voix sur IP en des signaux de commande et en des signaux vocaux analogiques,
le transfert des signaux vocaux analogiques par le biais de la sortie analogique (35) du dispositif calculateur (21) et de l'entrée analogique (24) du modem (22) et des signaux de commande par le biais de l'interface (32) et par le biais de l'interface de commande de signaux (23) au modem (22),
avec le modem (22), la conversion des signaux de commande et des signaux vocaux analogiques en des signaux de commande et vocaux convertis dans le format associé au réseau, et
l'envoi des signaux de commande et vocaux convertis dans le format associé au réseau par le biais de l'interface réseau (26) et du réseau.

8. Procédé selon la revendication 7, comprenant en plus les étapes de procédé suivantes :
l'obtention d'autres signaux de commande et vocaux présents dans le format associé au réseau par le biais de l'interface réseau (26),
avec le modem (22), la conversion des autres signaux de commande et vocaux présents dans le format associé au réseau en d'autres signaux de commande et en d'autres signaux vocaux analogiques,
le transfert des autres signaux vocaux analogiques par le biais de la sortie analogique (25) du modem (22) et de l'entrée analogique (34) du dispositif calculateur (21) et des autres signaux de commande par le biais de l'interface (32) et par le biais de l'interface de commande de signaux (23) au dispositif calculateur (21),
avec le dispositif calculateur (21), la conversion des autres signaux de commande et des autres signaux vocaux analogiques en d'autres signaux de commande et vocaux dans le format Voix sur IP, et
l'envoi des autres signaux de commande et vocaux dans le format Voix sur IP par le biais de l'interface Voix sur IP (28) du dispositif calculateur (21).
